# DEMANDE DE BREVET EUROPEEN

(11) **EP 4 668 069 A1**
(43) Date de publication de la demande: **24.12.2025**
(21) Numéro de dépôt: 25169320.6
(22) Date de dépôt: 09.04.2025
(51) Int. Cl.: G06F 3/0354, G06F 3/0362, G06F 3/0338, G06F 3/04845, G06F 3/04847, G06F 3/038, G06F 3/0485, G06F 3/0487

(54) **PROCEDE ET SYSTEME DE CONTROLE D'UN AFFICHEUR POUR AERONEF**

(30) Priorité: 18.06.2024 FR 2406477
(71) Demandeur: Airbus Helicopters, 13725 Marignane Cedex (FR)
(72) Inventeur: LASO LEON, Enrique, 31500 TOULOUSE (FR); FORTE, Patrick, 13700 MARIGNANE (FR); BRUEL, Alyson, 06800 CAGNES-SUR-MER (FR)
(74) Mandataire: GPI Brevets

(57) **Abrégé**

La présente invention concerne un système de contrôle (10), pour contrôler un afficheur (30), comportant un repose-paume (1) muni d'une face d'appui (11) configurée pour accueillir une paume d'une main d'un opérateur, de deux faces latérales (13,14) situées de part et d'autre dudit repose-paume (1), et d'une face avant (12). Ledit système de contrôle (10) comporte aussi quatre commandes (2-5), à savoir un roulette (2) en saillie d'une des faces latérales (13,14), mobile par rapport audit repose-paume (1) selon trois axes (AX1,AX2,AX3) non coplanaires, un bouton-poussoir (3), une couronne rotative (4) positionnée sur ladite face avant (12) et mobile en rotation par rapport audit repose-paume (1), une boule de commande (5), agencée au centre de ladite couronne rotative (4) et mobile en rotation par rapport audit repose-paume (1) autour de deux axes complémentaires (AX5,AX6). Ledit système de contrôle (10) comporte enfin un calculateur (9) configuré pour générer des ordres de commande pour contrôler ledit afficheur (30) en fonction des actions sur lesdites quatre commandes (2-5).

## Description

La présente invention se situe dans le domaine des dispositifs d'affichage, et en particulier ceux destinés à équiper les aéronefs.

La présente invention concerne un procédé et un système de contrôle d'au moins un afficheur pour aéronef.

Il est d'usage sur les équipements informatiques, par exemple un écran, de déplacer un pointeur, désigné également « curseur », à l'aide de moyens de commande, tels qu'une souris ou un pavé tactile.

L'apparition d'écrans munis de dalles tactiles a introduit une nouvelle façon de piloter et d'agir sur les images affichées sur un tel écran, en appuyant sur la dalle tactile de cet écran afin d'effectuer les actions précitées. Une dalle tactile permet également d'agir sur l'image affichée, notamment en la faisant défiler, en la déplaçant ou en changeant son échelle, par exemple par des mouvements réalisés avec deux doigts.

Divers afficheurs, notamment des écrans, y compris des écrans munis de dalles tactiles, sont aujourd'hui utilisés dans le poste de pilotage d'aéronefs. De tels afficheurs permettent par exemple d'afficher une carte qui peut ainsi être manipulée, déplacée, tournée.

Toutefois, l'utilisation de dispositifs de commande usuels dans un aéronef peut s'avérer complexe dans certaines conditions de vols, notamment en présence de turbulences. Ces turbulences et/ou les vibrations de l'aéronef peuvent rendre imprécis les gestes d'un opérateur embarqué pour contrôler, et manipuler un moyen de commande qu'il soit déporté ou formé par une dalle tactile d'un écran.

De plus, cette difficulté peut être aggravée par la nécessité d'utiliser un harnais de retenue maintenant un pilote à distance de certains afficheurs. La position relative d'un pilote et d'un afficheur peut éventuellement empêcher l'utilisation d'une dalle tactile.

Néanmoins, un pilote doit pouvoir contrôler un afficheur quelles que soient les conditions de vols et l'environnement vibratoire de l'aéronef.

Dans ce but, une dalle tactile peut être associée à un moyen secondaire de commande, qui reste accessible quelles que soient les conditions de vols et l'environnement vibratoire de l'aéronef.

Par exemple, des pavés tactiles multipoints peuvent être utilisés. Néanmoins, de tels pavés tactiles ne disposent généralement pas de système haptique fournissant à l'opérateur une information relative à la manipulation effectuée. Dans le cas d'un pavé tactile, un retour haptique peut uniquement être très générique, par exemple par l'émission de vibrations à chaque action de l'opérateur sur le pavé tactile.

Le document FR 3122934 décrit un système d'interaction à distance avec un curseur sur une interface Homme-Machine d'un aéronef, cette interface Homme-Machine pouvant comporter plusieurs écrans. Ce système d'interaction comporte un pommeau repose-main et, dans le prolongement du pommeau repose-main, un pavé tactile. Des boutons de commande peuvent également être positionnés de part et d'autre du pommeau repose-main.

Le document FR 3122649 décrit également un dispositif de commande d'un curseur d'une interface utilisateur graphique pour aéronef. Ce dispositif de commande comporte une structure de base, un corps saisissable par une main d'un opérateur, ce corps étant mobile par rapport à la structure de base, et un capteur de force détectant les mouvements du corps par rapport à la structure de base selon deux axes. Un circuit d'interface convertit les signaux fournis par le capteur de force en un signal de commande pour l'interface utilisateur graphique afin de déplacer le curseur sur cette interface utilisateur graphique. Le corps comporte des zones en reliefs, des saillies et des bosses pour améliorer sa préhension. Le corps comporte aussi plusieurs composants de commande, tels que des boutons, des leviers et des molettes par exemple, positionnés pour être actionnés par les doigts de la main de l'opérateur afin de fournir des commandes transmises à une unité de vol ou pour d'autres unités installées sur l'aéronef.

Le document US 2003/0048252 décrit un dispositif d'entrée de données comprenant un repose-main proéminent d'une plaque de fixation destinée à être fixée sur un poste de travail et un désignateur agencé sur cette plaque, en avant du repose main. Le désignateur peut être par exemple une sphère, une dalle tactile ou un levier, et est apte à pointer une position sur un écran d'un système informatique. Le repose-main s'étend principalement selon un arc en forme de U, deux boutons étant positionnés respectivement sur les faces situées aux extrémité de cet arc.

Les documents US 2015/0286291, US 5561445 et US 2012/0068928 sont plus éloignés de l'invention.

La présente invention a alors pour but de proposer une solution alternative et innovante pour contrôler un afficheur pour aéronef, utilisable par un opérateur quelles que soient les conditions de vols et l'environnement vibratoire de l'aéronef.

La présente invention consiste à proposer un procédé et un système de contrôle d'un afficheur pour aéronef, qui sont utilisables quelles que soient les conditions de vols et l'environnement vibratoire de l'aéronef, et en particulier en présence de turbulences. Ce procédé et ce système de contrôle d'un afficheur pour aéronef permettent ainsi de contrôler l'afficheur pour déplacer ou modifier une image affichée sur cet afficheur ainsi que pour déplacer un pointeur affiché sur cet afficheur.

La présente invention vise aussi un système d'affichage comportant au moins un afficheur et un tel système de contrôle.

La présente invention a tout d'abord pour objet un système de contrôle pour contrôler au moins un afficheur, le système de contrôle comportant un repose-paume, fixe par rapport à une structure, le repose-paume étant muni :
- d'une face d'appui configurée pour accueillir une paume d'une main d'un opérateur,
- de deux faces latérales, situées de part et d'autre du repose-paume, une des deux faces latérales, étant atteignable par un pouce de la main reposant sur le repose-paume, et
- d'une face avant reliant les deux faces latérales, et atteignable par au moins un autre doigt de la main reposant sur le repose-paume, voire par tous les doigts de cette main.

Le système de contrôle selon l'invention est remarquable en ce qu'il comporte les quatre commandes suivantes :
- au moins une roulette en saillie d'une face latérale parmi les deux faces latérales, la roulette étant munie d'au moins trois degrés de liberté, dont au moins un degré de liberté en rotation, par rapport au repose-paume,
- au moins un bouton-poussoir,
- une couronne rotative mobile en rotation par rapport au repose-paume autour d'un axe principal, la couronne rotative étant positionnée sur la face avant,
- une boule de commande, agencée au centre de la couronne rotative et de façon concentrique à la couronne rotative, la boule de commande étant mobile en rotation par rapport au repose-paume autour de deux axes complémentaires distincts de l'axe principal, et
- un calculateur configuré pour générer des ordres de commande pour contrôler l'afficheur en fonction des actions sur les quatre commandes.

Le repose-paume permet de supporter la paume d'une main d'un opérateur, par exemple le pilote ou le copilote d'un véhicule, par exemple un aéronef, sur la face d'appui, et d'ancrer ainsi fermement cette main. En conséquence, cette main est supportée et maintenue de façon stable sur la face d'appui, quelles que soient les conditions de vols et l'environnement vibratoire de l'aéronef, et en particulier en présence de turbulences.

Les quatre commandes sont positionnées sur les faces du repose-paume de sorte à être atteintes par les doigts de la main pour minimiser les mouvements de la main qui peut ainsi rester en appui sur le repose-paume. De plus, le positionnement des quatre commandes sur les faces latérale et avant du repose-paume suggère naturellement comment utiliser ces commandes avec les différents doigts de la main.

Par exemple, la roulette, positionnée sur une face latérale du repose-paume, est manipulable par l'index et le pouce de la main. Cette roulette est mobile selon trois axes, dont un axe primaire autorisant une rotation de la roulette sur elle-même, et deux axes supplémentaires distincts de l'axe primaire, ces axes supplémentaires et l'axe primaire étant non coplanaires. La roulette peut être mobile en rotation autour de chacun des axes supplémentaires ou en translation selon chacun de ces axes supplémentaires.

Les axes supplémentaires sont par exemple parallèles à un plan perpendiculaire à l'axe primaire. L'axe primaire de la roulette peut constituer un axe de symétrie de la roulette.

Le bouton-poussoir, positionné également sur une face latérale, est manipulable par l'index ou le pouce. Le bouton-poussoir est manipulable selon un axe de translation.

La couronne rotative, positionnée sur la face avant du repose-paume, est manipulable par l'index et le pouce de la main. La couronne rotative est mobile en rotation par rapport au repose-paume autour d'un axe principal, qui peut par exemple être perpendiculaire à la face avant ou à un plan médian de cette face avant.

La boule de commande, positionnée également sur la face avant, est manipulable par au moins un doigt de la main, voire par tous les doigts, pour des déplacements en rotation de la boule de commande autour des deux axes complémentaires distincts de l'axe principal. Ces axes complémentaires et l'axe principal sont non coplanaires, ces axes complémentaires étant par exemple parallèles à un plan perpendiculaire à l'axe principal.

L'opérateur peut alors agir avec précision sur les quatre commandes à l'aide de ses doigts, dans toutes les conditions de vol, y compris en cas de turbulences.

Le calculateur est alors configuré pour générer des ordres de commande pour contrôler l'afficheur en fonction des actions sur les quatre commandes et de leurs déplacements respectifs par rapport au repose-paume. Le contrôle de l'afficheur peut comprendre le déplacement d'un pointeur, tel un curseur ou une flèche par exemple, affiché sur l'afficheur ainsi que le contrôle d'une image affichée sur l'afficheur. Cette image peut comprendre par exemple une représentation graphique d'une carte, d'un ou de plusieurs instruments de vol ou une vue de l'environnement extérieur de l'aéronef notamment. Cette image comporte éventuellement un ou plusieurs symboles ou icônes. Le contrôle d'une image peut consister en un déplacement de cette image, en translation et/ou en rotation, ou en un changement d'échelle de cette image. Le contrôle de l'afficheur peut enfin comprendre une sélection d'une zone de l'image ou d'un symbole, par exemple une icône, ainsi qu'une action de validation, liée par exemple à un symbole ou une icône.

Le système de contrôle selon l'invention regroupe ainsi avantageusement en un seul dispositif plusieurs interfaces mécaniques permettant le contrôle précis et fiable de l'afficheur et d'une image affichée, en minimisant les mouvements des doigts de la main de l'opérateur, dans toutes les conditions de vol, en particulier en cas de turbulences.

Le système de contrôle selon l'invention peut comprendre une ou plusieurs des caractéristiques qui suivent, prises seules ou en combinaison.

Selon une possibilité, la roulette peut comporter le bouton-poussoir. Le bouton-poussoir peut par exemple être agencé à une extrémité libre de la roulette, dans la zone de préhension de cette roulette. L'axe de translation du bouton-poussoir peut par exemple être confondu avec l'axe primaire de la roulette. La roulette comporte dans ce cas uniquement trois degrés de liberté, à savoir un degré de liberté en rotation autour de l'axe primaire et deux degrés de liberté en translation ou en rotation selon les deux axes supplémentaires.

Alternativement, la roulette peut former le bouton-poussoir, la roulette étant mobile en translation selon l'axe primaire qui forme ainsi l'axe de translation du bouton-poussoir constitué par cette roulette. La roulette comporte dans ce cas quatre degrés de liberté, dont un degré de liberté en rotation autour de l'axe primaire et un degré de liberté en translation selon le même axe primaire, ainsi que deux degrés de liberté en translation ou en rotation selon les deux axes supplémentaires.

Selon une autre possibilité compatible avec les précédentes, la face latérale comportant la roulette peut comprendre un renflement latéral configuré pour guider le pouce et un index de la main vers la roulette. L'éminence thénar de la main, à savoir la partie de la paume de la main à laquelle est relié le pouce, est en appui sur ce renflement latéral. Ce renflement latéral permet d'une part de faciliter l'accès de la roulette au pouce et à l'index de la main, et d'autre part d'obtenir une préhension confortable de la roulette entre l'index et le pouce, aussi bien pour une rotation de la roulette sur elle-même, autour de l'axe primaire, que pour un déplacement selon les deux axes supplémentaires.

Par exemple, le renflement latéral peut être de forme elliptique.

Selon une autre possibilité compatible avec les précédentes, le système de contrôle peut comporter deux roulettes et deux boutons poussoirs, les deux faces latérales comportant chacune une des deux roulettes et un des deux boutons poussoirs. Le bouton-poussoir et La roulette sont ainsi dupliqués de manière symétrique sur chacune des faces latérales du repose-paume afin de permettre une utilisation ambidextre, de façon similaire que l'opérateur soit droitier ou gaucher.

Selon une autre possibilité compatible avec les précédentes, au moins une des quatre commandes peut comporter un système haptique en réponse à tout mouvement ou déplacement. Un tel système haptique permet à cette commande de fournir à l'opérateur un retour haptique suite à un déplacement de la commande. Ce retour haptique peut par exemple se caractériser par un effort ou une résistance au déplacement de la commande et provoquant le mouvement prévu de l'image ou du pointeur sur l'afficheur. Ce retour haptique permet avantageusement de fournir à l'opérateur une réponse sensitive à son action sur la commande et participe à augmenter la précision de son geste.

Par exemple, la roulette comporte des crans d'incrémentation autour de son axe primaire, marquant mécaniquement une rotation de la roulette entre deux de ces crans d'incrémentation, ces deux crans d'incrémentation étant adjacents. La roulette comporte par exemple des rainures parallèles à l'axe primaire, ces rainures étant équiréparties en azimut autour de cet axe primaire, et coopérant avec un ou plusieurs éléments en saillie du repose-paume ou d'un élément structurel du repose-paume. Inversement, le repose-paume ou un élément structurel du repose-paume peut comporter de telles rainures parallèles à l'axe primaire et équiréparties en azimut autour de cet axe primaire, ces rainures coopérant avec un ou plusieurs éléments en saillie de la roulette.

Par exemple, la roulette peut comporter des éléments de retour élastique fournissant un retour haptique selon les axes supplémentaires. Ces éléments de retour élastique contribuent également à ramener la roulette à une position initiale selon ces axes supplémentaires. Ces éléments de retour élastique peuvent par exemple comprendre un ou plusieurs ressorts sollicités en traction, en compression ou en torsion.

De façon similaire à la roulette, la couronne rotative peut comporter des crans d'incrémentation autour de l'axe principal, marquant mécaniquement une rotation de la couronne rotative entre deux crans d'incrémentation, ces deux crans d'incrémentation étant adjacents. La couronne rotative comporte par exemple des rainures parallèles à l'axe principal, ces rainures étant équiréparties en azimut autour de cet axe principal, et coopérant avec un ou plusieurs éléments en saillie du repose-paume ou d'un élément structurel du repose-paume. Inversement, le repose-paume ou un élément structurel du repose-paume peut comporter de telles rainures parallèles à l'axe principal et équiréparties en azimut autour de cet axe principal, ces rainures coopérant avec un ou plusieurs éléments en saillie de la couronne rotative.

Enfin, le bouton-poussoir peut comporter un ou plusieurs éléments de retour élastique fournissant un retour haptique selon l'axe de translation. Ce ou ces éléments de retour élastique contribuent éventuellement à ramener le bouton-poussoir à une position initiale selon l'axe de translation. Ce ou ces éléments de retour élastique peuvent par exemple comprendre un ou plusieurs ressorts en traction.

Selon une autre possibilité compatible avec les précédentes, la roulette peut comporter une première roue codeuse autour de l'axe primaire et des interrupteurs ou des jauges de contrainte le long des deux axes supplémentaires distincts de l'axe primaire pour détecter et mesurer les déplacements de la roulette respectivement autour de l'axe primaire et selon les deux axes supplémentaires. La boule de commande peut comporter des capteurs optiques pour détecter les déplacements de la boule de commande autour des deux axes complémentaires alors que la couronne rotative peut comporter une seconde roue codeuse autour de l'axe principal.

Les première et seconde roues codeuses, les interrupteurs ou jauges de contrainte et les capteurs optiques peuvent alors transmettre des informations de mesure relatives aux déplacements de ces commandes, via l'émission de signaux numériques ou analogiques, électriques ou optiques, à l'attention du calculateur, en vue de générer des ordres de commande transmis à l'afficheur pour déplacer ou modifier l'image affichée sur l'afficheur.

Selon une autre possibilité compatible avec les précédentes, le calculateur peut être configuré pour générer des ordres de commande transmis à l'afficheur en réponse à des signaux de commande transmis par les commandes afin d'effectuer :
- un déplacement d'un pointeur affiché sur l'afficheur en fonction d'un déplacement de la boule de commande,
- une action de sélection ou de validation lors d'un appui sur le bouton-poussoir,
- une modification d'une échelle d'affichage d'une image affichée sur l'afficheur en fonction d'une rotation de la roulette autour de l'axe primaire,
- un déplacement de l'image en fonction d'un déplacement de la roulette selon les deux axes supplémentaires, et
- une rotation de l'image en fonction d'une rotation de la couronne rotative.

De la sorte, le système de contrôle selon l'invention permet de contrôler l'afficheur de manière à remplir les mêmes fonctions qu'un système usuel muni d'une dalle tactile, sans en présenter les inconvénients. L'opérateur peut donc s'adapter rapidement au système de contrôle selon l'invention, tout en obtenant une stabilité et une précision de commande optimisées, quelles que soient les conditions de vols et l'environnement vibratoire de l'aéronef, et en particulier en présence de turbulences.

De plus, la présente invention a également pour objet un système d'affichage comportant au moins un afficheur affichant une image et un pointeur, voire un ou plusieurs symboles, ainsi qu'un système de contrôle tel que précédemment décrit.

Ce système d'affichage constitue une interface Homme-Machine, susceptible d'équiper un véhicule, par exemple un aéronef et permettant de contrôler l'afficheur, et en particulier de contrôler et de modifier l'image affichée sur l'afficheur, avec stabilité et précision à l'aide des quatre commandes du système de contrôle dans toutes les conditions de vols, y compris en cas de turbulences.

Enfin, la présente invention a aussi pour objet un procédé de contrôle d'au moins un afficheur à l'aide d'un système de contrôle tel que précédemment décrit.

Ce procédé comporte les étapes suivantes réalisées en fonction des actions sur ladite au moins une roulette, le bouton-poussoir, la couronne rotative et la boule de commande du système de contrôle :
- un déplacement d'un pointeur affiché sur l'afficheur en fonction d'un déplacement de la boule de commande,
- une action de sélection ou de validation lors d'un appui sur le bouton-poussoir,
- une modification d'une échelle d'affichage d'une image affichée sur l'afficheur en fonction d'une rotation de la roulette autour de l'axe primaire,
- un déplacement de l'image en fonction d'un déplacement de la roulette selon les deux axes supplémentaires, et
- une rotation de l'image en fonction d'une rotation de la couronne rotative.

Le procédé selon l'invention permet ainsi de contrôler l'afficheur, et en particulier de contrôler et de modifier l'image affichée sur l'afficheur ainsi que de déplacer un pointeur affiché sur l'afficheur de façon similaire à des dispositifs de contrôle usuels, tel qu'une dalle tactile par exemple, tout en obtenant une stabilité et une précision de commande, dans toutes les conditions de vols, y compris en cas de turbulences.

De plus, lorsqu'aucun pointeur n'est affiché sur l'afficheur, une première action sur ladite au moins une roulette, le bouton-poussoir, la couronne rotative ou la boule de commande génère un affichage du pointeur sur l'afficheur.

Dans ce cas, le pointeur peut être affiché sur l'afficheur, soit à une dernière position du pointeur sur l'afficheur, soit à une position de référence prédéterminée. Cette position de référence prédéterminée est par exemple le centre de l'afficheur. La dernière position du pointeur sur l'afficheur peut avoir été sauvegardée dans une mémoire du calculateur.

Alternativement, lorsqu'aucun pointeur n'est affiché sur l'afficheur, un contact sur une dalle tactile de l'afficheur peut permettre un affichage du pointeur au niveau de ce point de contact sur l'afficheur.

De la sorte, l'opérateur peut, suite à l'affichage du pointeur sur l'afficheur, déplacer le pointeur.

En outre, cette première action peut être ignorée pour la réalisation des étapes précédemment citées. En effet, cette première action, provoquant l'affichage du pointeur sur l'afficheur, ne peut être utilisée pour réaliser une autre action. A titre illustratif, la première rotation de la roulette provoque l'affichage du pointeur, et non pas une modification de l'échelle de l'image affichée.

L'invention et ses avantages apparaîtront avec plus de détails dans le cadre de la description qui suit avec des exemples donnés à titre illustratif en référence aux figures annexées qui représentent :
- la figure 1, un système de contrôle selon l'invention,
- la figure 2, un système de contrôle présentant un renflement latéral,
- la figure 3, des gestes de manipulation du système de commande selon la figure 1,
- la figure 4, des gestes de manipulation du système de commande selon la figure 1,
- la figure 5, des gestes de manipulation du système de commande selon la figure 1,
- la figure 6, des gestes de manipulation du système de commande selon la figure 1,
- la figure 7, des gestes de manipulation du système de commande selon la figure 1,
- la figure 8, une variante du système de contrôle selon la figure 1, et
- la figure 9, un schéma illustrant un procédé de contrôle d'au moins un afficheur selon l'invention.

Les éléments présents dans plusieurs figures distinctes sont affectés d'une seule et même référence.

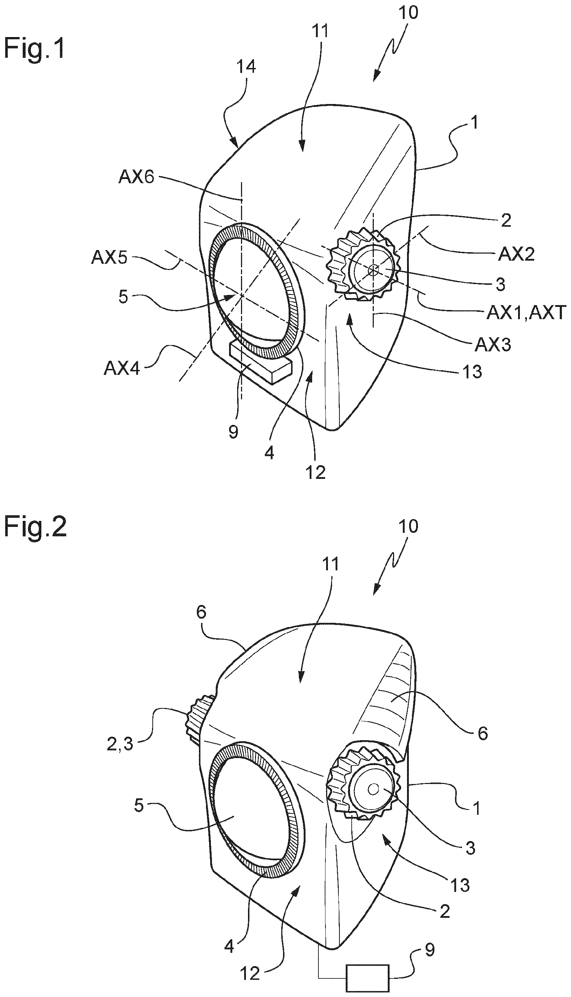

En référence aux figures 1 et 2, un système de contrôle 10 selon l'invention comporte un repose-paume 1, un calculateur 9 et quatre commandes 2-5 positionnées sur des faces 11-14 du repose-paume 1. Les quatre commandes 2-5 sont configurées pour contrôler, via le calculateur 9, un afficheur 30, et en particulier une image affichée sur cet afficheur 30 ainsi qu'un pointeur affiché sur cet afficheur. Le système de contrôle 10 et l'afficheur 30 peuvent former ensemble un système d'affichage 20. Un tel système d'affichage 20 peut équiper un aéronef, et notamment un poste de pilotage ou un cockpit de cet aéronef. Alternativement, un tel système d'affichage 20 peut être agencé au sein de tout environnement nécessitant de piloter un curseur et une image. Par exemple, un tel système d'affichage 20 peut être agencé au sein de tout type de véhicule, par exemple un tracteur ou un bateau sujet aussi à des mouvements brusques et à des vibrations.

Indépendamment de l'agencement du système d'affichage 20, le repose-paume 1 est fixe par rapport à une structure, par exemple solidaire du véhicule, et comporte plusieurs faces 11-14. Le repose-paume 1 comporte une face d'appui 11 configurée pour recevoir une paume d'une main 50 d'un opérateur. Cette face d'appui 11 est par exemple orientée vers le haut, lorsque le système de contrôle 10 équipe un aéronef posé sur un sol horizontal.

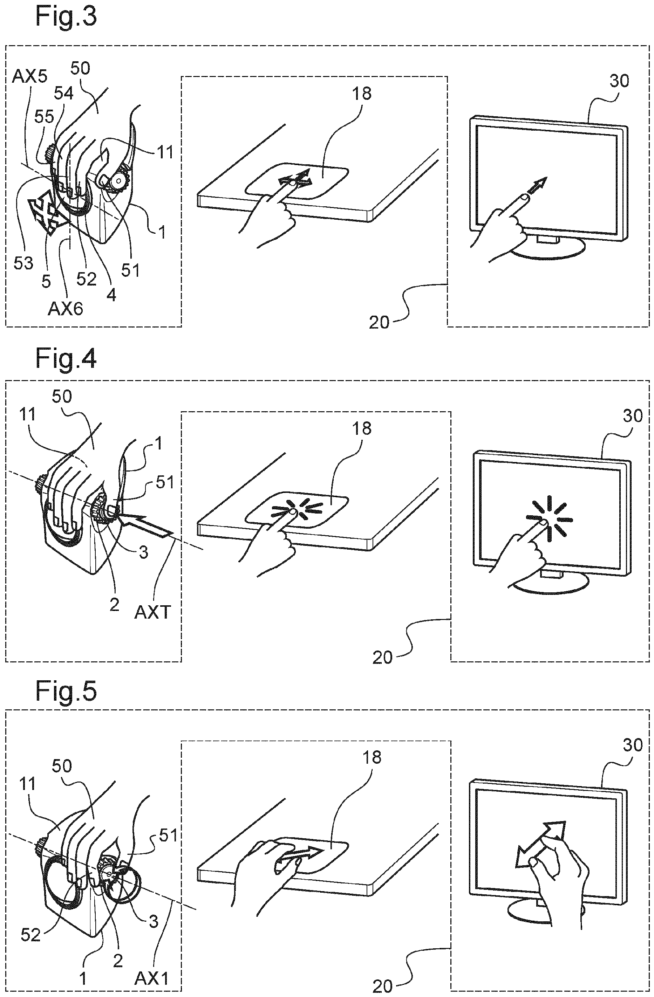

Le repose-paume 1 comporte deux faces latérales 13,14, adjacentes à la face d'appui 11 et situées de part et d'autre du repose-paume 1. Une de ces deux faces latérales 13,14 est atteignable par un pouce 51 de la main 50 reposant sur le repose-paume 1. Une première face latérale 13 est atteignable par le pouce 51 d'une main 50 droite, comme représenté sur la figure 3. La seconde face latérale 14 opposée à la première face latérale 13 est quant à elle atteignable par le pouce d'une main gauche. Cette seconde face latérale 14 peut également être atteinte par le petit doigt d'une main 50 droite, la première face latérale 13 étant quant à elle atteignable par le petit doigt d'une main gauche.

Le repose-paume 1 comporte enfin une face avant 12 reliant les deux faces latérales 13,14, et atteignable par au moins un doigt 51-55 de la main 50 dont la paume repose sur le repose-paume 1, voire par tous les doigts 51-55 de cette main 50.

Les quatre commandes 2-5 du système de contrôle 10 comportent notamment au moins une roulette 2 en saillie d'une des faces latérales 13-14. Cette roulette 2 est munie de trois degrés de liberté dont au moins un degré de liberté en rotation par rapport au repose-paume 1. La roulette 2 tourne autour d'un axe primaire AX1, autorisant une rotation de la roulette 2 sur elle-même sans butée, la roulette 2 pouvant ainsi tourner indéfiniment autour de cet axe primaire AX1. La roulette 2 se déplace également, de façon limitée, selon deux axes supplémentaires AX2,AX3 distincts et non parallèles à l'axe primaire AX1. La roulette 2 peut par exemple se déplacer en translation le long des deux axes supplémentaires AX2,AX3, ou alternativement en rotation autour de ces deux axes supplémentaires AX2,AX3.

Les deux axes supplémentaires AX2,AX3 sont non parallèles entre eux, et peuvent par exemple être parallèles à un plan perpendiculaire à l'axe primaire AX1. Les deux axes supplémentaires AX2,AX3 peuvent éventuellement être coplanaires. De plus, l'axe primaire AX1 peut être perpendiculaire à la face latérale 13,14 sur laquelle est agencé la roulette 2, si cette face latérale 13,14 est sensiblement plane, ou perpendiculaire à un plan médian de cette face latérale 13,14.

Le système de contrôle 10 peut par exemple comporter une seule roulette 2 agencée sur la première face latérale 13, et atteignable par le pouce 51 et l'index 52 d'une main 50 droite. Alternativement, le système de contrôle 10 peut comporter une seule roulette 2 agencée sur la seconde face latérale 14 et atteignable par le pouce et l'index d'une main gauche.

Alternativement et tel qu'illustré sur la figure 2, le système de contrôle 10 peut comporter deux roulettes 2 agencées respectivement sur les deux faces latérales 13-14.

Le système de contrôle 10 comporte aussi au moins un bouton-poussoir 3, positionné également sur une des faces latérales 13-14 où est agencée la roulette 2. Le bouton-poussoir 3 est actionnable en translation par l'index 52 ou le pouce 51 de la main 50 posée sur la face d'appui 11, selon un axe de translation AXT. A l'instar de la roulette 2, le système de contrôle 10 peut, par exemple, comporter un seul bouton-poussoir 3 positionné sur une des faces latérales 13-14 pour être manipulable soit par une main 50 droite, soit par une main gauche, ou bien comporter deux boutons-poussoirs 3 positionnés respectivement sur les deux faces latérales 13-14, chacun des deux boutons-poussoirs 3 étant alors manipulable respectivement par le pouce 51 ou l'index 52 d'une main 50 droite ou gauche.

La roulette 2 peut comporter le bouton-poussoir 3, qui est agencé par exemple à une extrémité de la roulette 2. L'axe de translation AXT du bouton-poussoir 2 peut dans ce cas être confondu avec l'axe primaire AX1 de la roulette 2.

Alternativement, la roulette 2 peut former le bouton-poussoir 3. La roulette 2 est alors mobile en translation dans son ensemble selon l'axe de translation AXT du bouton-poussoir 3 qui est alors confondu avec l'axe primaire AX1 de la roulette 2. Dans ce cas, la roulette 2 comporte quatre degrés de liberté, dont un degré de liberté en rotation et un degré de liberté en translation selon le même axe primaire AX1.

Le système de contrôle 10 comporte également une couronne rotative 4 positionnée sur la face avant 12 et mobile en rotation par rapport au repose-paume 1 autour d'un axe principal AX4 autorisant une rotation de la couronne rotative 4 sur elle-même sans butée. La couronne rotative 4 peut être reliée au repose-paume 1 par une liaison à pivot. L'axe principal AX4 peut être perpendiculaire à la face avant 12 si cette face avant 12 est sensiblement plane, ou à un plan médian de cette face avant 12.

Le système de contrôle 10 comporte enfin une boule de commande 5 positionnée sur la face avant 12, et agencée au centre de la couronne rotative 4 et de façon concentrique à la couronne rotative 4. La boule de commande 5 est mobile en rotation par rapport au repose-paume 1 autour de deux axes complémentaires AX5,AX6 distincts de l'axe principal AX4, les deux axes complémentaires AX5,AX6 et l'axe principal AX4 étant non coplanaires. Les deux axes complémentaires AX5,AX6 sont non parallèles entre eux, et peuvent par exemple être parallèles à un plan perpendiculaire à l'axe principal AX4. Les deux axes complémentaires AX5,AX6 sont coplanaires. La boule de commande 5 peut être reliée au repose-paume 1 par une liaison à cardan ou par deux liaisons à pivot.

En référence à la figure 2, le système de contrôle 10 peut comporter, sur la face latérale 13,14 comprenant la roulette 2, un renflement latéral 6 configuré pour guider le pouce 51 et l'index 52 de la main 50 vers la roulette 2, et le bouton-poussoir 3 lorsque ce bouton-poussoir 3 est positionné sur La roulette 2 ou est formé par la roulette 2. Le renflement latéral 6 facilite ainsi la préhension de la roulette 2 avec conjointement le pouce 51 et l'index 52 de la main 50. L'opérateur peut ainsi :
- mettre en rotation la roulette 2 sur -même autour de l'axe primaire AX1, en déplaçant l'index 52 et le pouce 51 tangentiellement dans des directions opposées,
- déplacer la roulette 2 selon l'axe supplémentaire AX2 en étendant ou en rétractant l'index 52 et le pouce 51 simultanément et de manière similaire,
- déplacer la roulette 2 selon l'axe supplémentaire AX3 en poussant soit sur le pouce 51, soit sur l'index 52.

Le renflement latéral 6 peut par exemple être de forme elliptique pour guider de façon intuitive et confortable le pouce 51 et l'index 52 de la main 50 vers la roulette 2 et le bouton-poussoir 3.

En outre, le système de contrôle 10 peut comporter, de manière usuelle, des dispositifs de mesure afin de mesurer les déplacements des commandes 2-5. Par exemple, le système de contrôle 10 peut comporter une première roue codeuse, désignée également « codeur rotatif », associée à la roulette 2 et mobile autour de l'axe primaire AX1 pour détecter et/ou mesurer les déplacements de la roulette 2 autour de cet axe primaire AX1. Cette première roue codeuse peut par exemple être une roue de codage optique. Le système de contrôle 10 peut aussi comporter des interrupteurs ou des jauges de contrainte le long des deux axes supplémentaires AX2,AX3, associés à la roulette 2, pour détecter et/ou mesurer les déplacements de la roulette 2 selon respectivement les deux axes supplémentaires AX2,AX3.

De façon similaire, le système de contrôle 10 peut comporter une seconde roue codeuse associée à la couronne rotative 4 et mobile autour de l'axe principal AX4 pour détecter et/ou mesurer les déplacements de la couronne rotative 4 autour de cet axe principal AX4. Cette seconde roue codeuse peut par exemple être une roue de codage optique.

Le système de contrôle 10 peut comporter un interrupteur associé au bouton-poussoir 3 pour détecter un appui sur le bouton-poussoir 3 selon l'axe de translation AXT.

Enfin, le système de contrôle 10 peut comporter des capteurs optiques associés à la boule de commande 5 pour détecter et/ou mesurer les déplacements de la boule de commande 5 autour des deux axes complémentaires AX5,AX6.

Par ailleurs, une ou plusieurs des quatre commandes 2-5 peuvent comporter un système haptique.

Par exemple, la roulette 2 peut comporter des crans d'incrémentation autour de l'axe primaire AX1, marquant mécaniquement, par un point dur nécessitant un léger effort de manipulation pour être dépassé, une rotation de la roulette 2 entre deux crans d'incrémentation. Ces crans d'incrémentation permettent à l'opérateur de ressentir la rotation de la roulette 2 autour de l'axe primaire AX1, atténuant avantageusement les tendances à dépasser la position voulue. Ces crans d'incrémentation peuvent notamment être associés, voire intégrés, à une première roue codeuse le cas échéant.

De façon similaire, la couronne rotative 4 peut également comporter des crans d'incrémentation autour de l'axe principal AX4, marquant mécaniquement une rotation de la couronne rotative 4 entre deux des crans d'incrémentation. Ces crans d'incrémentation peuvent notamment être associés, voire intégrés, à une seconde roue codeuse le cas échéant.

Enfin, le bouton-poussoir 3 et la roulette 2 peuvent comporter respectivement un ou des éléments de retour élastique pour les ramener vers une position initiale. Ces éléments de retour élastique peuvent comporter un ou plusieurs ressorts par exemple.

Les positions initiales du bouton-poussoir 3 et de la roulette 2, dite également « positions neutres », sont les positions dans lesquelles se trouvent respectivement le bouton-poussoir 3 et la roulette 2 lorsqu'aucune force ni action n'est exercée sur eux. Ce ou ces éléments de retour élastique permettent ainsi respectivement au bouton-poussoir 3 et à la roulette 2 de revenir de façon autonome et automatique vers leur position initiale après tout déplacement lorsqu'aucune force ni action n'est plus exercée sur eux, à savoir lorsque le bouton-poussoir 3 et la roulette 2 ne sont pas déplacés ou maintenus en position par l'opérateur.

Le calculateur 9 est configuré pour générer des ordres de commande pour contrôler l'afficheur 30 en fonction des actions sur les quatre commandes 2-5. Ces ordres de commande sont générés en réponse à des signaux de commande transmis par les commandes 2-5, voire par les dispositifs de mesure associés à ces commandes 2-5. Le calculateur 9 peut être relié aux commandes 2-5, voire directement aux dispositifs de mesure associés à ces commandes 2-5 le cas échéant.

Ces ordres de commande sont ensuite transmis à l'afficheur 30, via des signaux dénommé « signaux d'ordre » par commodité. Les signaux de commande et les signaux d'ordre peuvent être des signaux électriques ou optiques, numériques ou analogiques, porteurs respectivement du ou des déplacements des commandes 2-5 et d'un ou d'ordres de commande. Les signaux de commande et les signaux d'ordre peuvent être transmis par des liaisons filaires ou sans fil.

Une mémoire du calculateur 9 ou reliée au calculateur 9, de façon filaire ou sans fil, peut dans ce but comporter des lois de commande transformant tout déplacement de ces commandes 2-5 en ordre de commande. Les quatre commandes 2-5 sont ainsi configurées pour contrôler l'afficheur 30, via les ordres de commande générés par le calculateur 9, par exemple pour déplacer ou modifier une image affichée sur l'afficheur 30, pour déplacer un pointeur affiché sur l'afficheur 30, pour effectuer une sélection sur l'afficheur 30 ou une action de validation.

Le calculateur 9 peut comprendre une ou plusieurs unités de traitement, chaque unité de traitement ayant par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Ces ordres de commande permettent ainsi d'effectuer plusieurs actions afin de contrôler l'afficheur 30. Les déplacements des commandes 2-5 du système de contrôle 10 selon l'invention permettent d'obtenir les mêmes effets que les gestes habituellement effectués pour contrôler un afficheur à l'aide d'un pavé tactile 18, comme représenté sur les figures 3 à 7. Ces déplacements des commandes 2-5 sont réalisés tout en posant la paume de cette main 50 sur la face d'appui 11 du repose-paume 1, minimisant avantageusement les mouvements des doigts 51-55 de la main 50 de l'opérateur, quelles que soient les conditions de vol, en particulier en cas de turbulences.

Lorsqu'un ou plusieurs doigts 51-55 de la main 50 déplacent tangentiellement la boule de commande 5 selon l'un ou les deux axes complémentaires AX5,AX6, comme représenté sur la figure 3, le calculateur 9 est configuré pour générer un ordre de commande engendrant un déplacement d'un pointeur 35 affiché sur l'afficheur 30 en fonction du déplacement de la boule de commande 5.

Lorsque le pouce 51 appuie sur le bouton-poussoir 3 selon l'axe de translation AXT, comme représenté sur la figure 4, le calculateur 9 est configuré pour générer un ordre de commande relatif à une action de sélection d'un symbole, par exemple une icône, affiché sur l'afficheur 30 ou d'une zone de l'image affichée sur l'afficheur 30 ou une action de validation via un symbole.

Lorsque le pouce 51 et l'index 52 de la main 50 font tourner la roulette 2 autour de son axe primaire AX1 sur elle-même, comme représenté sur la figure 5, le calculateur 9 est configuré pour générer un ordre de commande engendrant une modification d'une échelle d'affichage d'une image affichée sur l'afficheur 30 en fonction de cette rotation de la roulette 2. Cette modification permet par exemple de zoomer ou dézoomer sur une carte affichée sur l'afficheur 30.

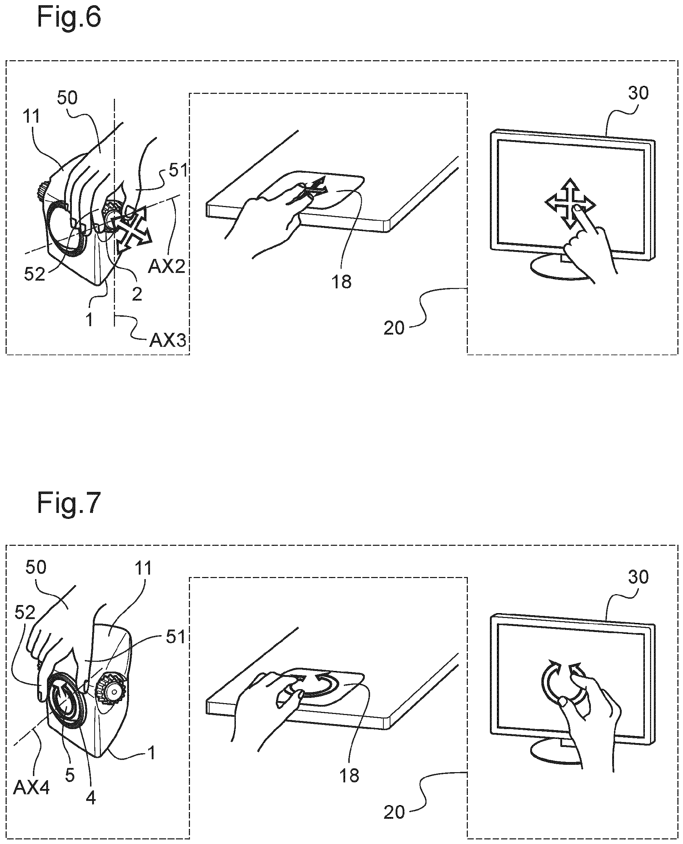

Lorsque le pouce 51 et/ou l'index 52 de la main 50 déplacent la roulette 2 selon l'un ou les deux axes supplémentaires AX2,AX3, comme représenté sur la figure 6, le calculateur 9 est configuré pour générer un ordre de commande engendrant un déplacement de l'image affichée sur l'afficheur 30 en fonction de ce déplacement de la roulette 2. Ce déplacement peut ainsi être obtenu en appliquant sur la roulette 2, à l'aide du pouce 51 et/ou de l'index 52, un mouvement de poussée ou de traction selon un des deux axes supplémentaires AX2,AX3, par exemple sensiblement verticalement, ou un mouvement latéral selon l'autre axe supplémentaire AX2,AX3, par exemple sensiblement horizontalement, comme représenté sur la figure 6. Ce déplacement permet par exemple de déplacer une carte affichée sur l'afficheur 30.

Enfin, lorsque le pouce 51 et/ou l'index 52 de la main 50 déplacent la couronne rotative 4 autour de l'axe principal AX4, comme représenté sur la figure 7, le calculateur 9 est configuré pour générer un ordre de commande engendrant une rotation de l'image affichée sur l'afficheur 30 en fonction d'une telle rotation de la couronne rotative 4. Cette rotation permet par exemple de faire tourner sur elle-même une carte affichée sur l'afficheur 30 autour d'un axe perpendiculaire à un plan défini par l'afficheur 30.

En outre, le calculateur 9 peut être configuré pour ne pas générer simultanément plusieurs ordres de commande. De la sorte, lorsqu'une première commande 2-5 est sollicitée par un opérateur, le calculateur 9 génère un ordre de commande pour contrôler l'afficheur 30 en fonction de cette sollicitation. Si l'opérateur sollicite une deuxième commande 2-5 en parallèle, aucun ordre de commande relatif à cette deuxième commande 2-5 n'est émis, le calculateur 9 générant uniquement un ordre de commande relatif à la première commande 2-5 sollicitée.

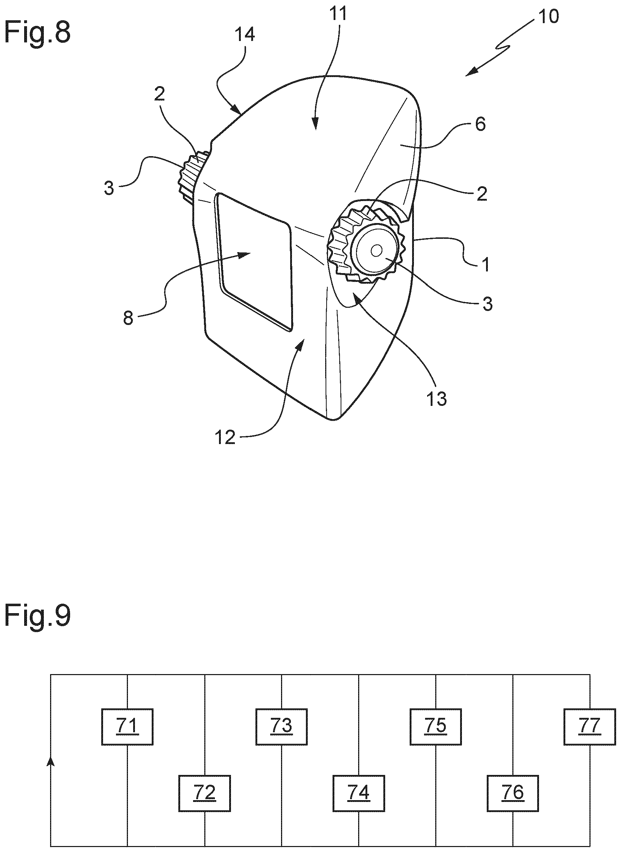

Par ailleurs, la couronne rotative 4 et la boule de commande 5 peuvent être remplacées par un pavé tactile 8 agencé sur la face avant du repose-paume 1, comme représenté sur la figure 8. Les gestes utilisés par l'opérateur pour contrôler l'afficheur 30 sont avantageusement identiques que le système de contrôle 10 selon l'invention comporte la couronne rotative 4 et la boule de commande 5 ou le pavé tactile 8.

La présente invention vise également un procédé de contrôle d'au moins un afficheur 30 à l'aide du système de contrôle 10. Une mémoire du calculateur 9 ou reliée au calculateur 9, de façon filaire ou sans fil, peut par exemple stocker des instructions ou des algorithmes exécutés par le calculateur 9 pour mettre en œuvre le procédé de contrôle de l'invention. La mémoire peut ainsi stocker un programme d'ordinateur destiné à être exécuté par le calculateur 9 afin de mettre en œuvre un tel procédé de contrôle.

Ce procédé de contrôle comporte les étapes suivantes illustrées sur la figure 9. Ces étapes sont réalisées en fonction des actions sur ladite au moins une roulette 2, le bouton-poussoir 3, la couronne rotative 4 et la boule de commande 5 du système de contrôle 10.

Tout d'abord, un déplacement 71 d'un pointeur 35 affiché sur l'afficheur 30 peut être réalisé en fonction d'un déplacement de la boule de commande 4 selon les deux axes complémentaires AX5,AX6, effectué à l'aide d'un ou de plusieurs doigts 51-55 de la main 50.

Une action de sélection 72 d'une icône ou d'un symbole affiché sur l'afficheur 30 ou d'une zone sur l'image affichée sur l'afficheur 30 ou une action ou de validation 73 via une icône ou un symbole peut être réalisée lors d'un appui sur le bouton-poussoir 3 selon un axe de translation AXT par l'intermédiaire du pouce 51.

Une modification 74 d'une échelle d'affichage d'une image affichée sur l'afficheur 30 peut aussi être réalisée en fonction d'une rotation de la roulette 2 autour d'un axe primaire AX1 autorisant une rotation de la roulette 2 sur elle-même, à l'aide du pouce 51 et de l'index 52 de la main 50.

Un déplacement 75 de l'image peut encore être réalisée en fonction d'un déplacement de la roulette 2 selon les deux axes supplémentaires AX2,AX3 effectuée à l'aide du pouce 51 et/ou de l'index 52.

Enfin, une rotation 76 de l'image peut être réalisée en fonction d'une rotation de la couronne rotative 4 autour d'un axe principal AX4, effectuée à l'aide du pouce 51 et de l'index 52.

Toutes ces étapes du procédé de contrôle sont avantageusement réalisées en maintenant la paume de cette main 50 sur la face d'appui 11 du repose-paume 1, afin de minimiser les mouvements des doigts 51-55 de la main 50 de l'opérateur, tout en garantissant des gestes précis et sûrs, dans toutes les conditions de vol, y compris en cas de turbulences.

En outre, lorsqu'aucun pointeur 35 n'est préalablement affiché sur l'afficheur 30, en réponse à une première action sur la roulette 2, le bouton-poussoir 3, la couronne rotative 4 ou la boule de commande 5, le calculateur 9 peut être configuré pour transmettre un signal à l'afficheur 30 afin de réaliser un affichage 77 du pointeur 35 sur l'afficheur 30. Cette première action permet avantageusement à l'opérateur de faire apparaitre le pointeur 35 sur l'afficheur 30.

Lors de cette étape d'affichage 77, le pointeur 35 peut être affiché sur l'afficheur 30 soit à une dernière position d'affichage du pointeur 35 sur l'afficheur 30, soit à une position de référence prédéterminée. Cette position de référence prédéterminée est par exemple le centre de l'afficheur. La dernière position d'affichage du pointeur 77 sur l'afficheur 30 ainsi que la position de référence peuvent avoir été stockées dans une mémoire du calculateur 9 ou une mémoire reliée à ce calculateur 9.

Enfin, la première action peut être prise en compte par le calculateur 9 uniquement pour l'affichage 77 du pointeur 35 sur l'afficheur 30 et ne pas provoquer la réalisation d'une des étapes 71-76 précédemment citées. Cette première action est alors à ce titre ignorée pour une réalisation d'une de ces étapes 71-76 afin en particulier d'éviter la réalisation d'opérations involontaires et/ou non souhaitées. Par contre, si le pointeur 35 est affiché sur l'afficheur 30, toute action sur une des commandes 2-5 provoque la génération d'un ordre de commande pour réaliser une de ces étapes 71-76, afin de contrôler l'image affichée sur l'afficheur 30.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de contrôle (10) pour contrôler un afficheur (30), ledit système de contrôle (10) comportant un repose-paume (1), fixe par rapport à une structure, ledit repose-paume (1) étant muni :
- d'une face d'appui (11) configurée pour accueillir une paume d'une main d'un opérateur,
- de deux faces latérales (13,14) situées de part et d'autre dudit repose-paume (1), une desdites deux faces latérales (13,14) étant atteignable par un pouce de ladite main reposant sur ledit repose-paume (1), et
- d'une face avant (12) atteignable par au moins un autre doigt de ladite main reposant sur ledit repose-paume (1),
**caractérisé en ce que** ledit système de contrôle (10) comporte les quatre commandes (2-5) suivantes :
- au moins une roulette (2) en saillie d'une face latérale parmi lesdites deux faces latérales (13,14), ladite roulette (2) étant munie d'au moins trois degrés de liberté, dont au moins un degré de liberté en rotation, par rapport audit repose-paume (1),
- au moins un bouton-poussoir (3),
- une couronne rotative (4) mobile en rotation par rapport audit repose-paume (1) autour d'un axe principal (AX4), ladite couronne rotative (4) étant positionnée sur ladite face avant (12),
- une boule de commande (5), agencée au centre de ladite couronne rotative (4) et de façon concentrique à ladite couronne rotative (4), ladite boule de commande (5) étant mobile en rotation par rapport audit repose-paume (1) autour de deux axes complémentaires (AX5,AX6) distincts dudit axe principal (AX4), et
- un calculateur (9) configuré pour générer des ordres de commande pour contrôler ledit afficheur (30) en fonction des actions sur lesdites quatre commandes (2-5).

2. Système de contrôle (10) selon la revendication 1,
dans lequel ladite roulette (2) comporte ledit bouton-poussoir (3), ladite roulette (2) comportant trois degrés de liberté.

3. Système de contrôle (10) selon la revendication 1,
dans lequel ladite roulette (2) forme ledit bouton-poussoir (3), ladite roulette (2) comportant quatre degrés de liberté, dont un degré de liberté en rotation et un degré de liberté en translation selon un axe primaire (AX1) autorisant une rotation de ladite roulette (2) sur elle-même.

4. Système de contrôle (10) selon l'une quelconque des revendications 1 à 3,
dans lequel ledit système de contrôle (10) comporte deux roulettes (2) et deux boutons poussoirs (3), lesdites deux faces latérales (13,14) comportant chacune une desdites deux roulettes (2) et un desdits deux boutons poussoirs (3).

5. Système de contrôle (10) selon l'une quelconque des revendications 1 à 4,
dans lequel ladite face latérale (13,14) comportant ladite roulette (2) comprend un renflement latéral configuré pour guider ledit pouce et un index de ladite main vers ladite roulette (2).

6. Système de contrôle (10) selon l'une quelconque des revendications 1 à 5,
dans lequel au moins une desdites quatre commandes (2-5) comporte un système haptique en réponse à tout mouvement.

7. Système de contrôle (10) selon la revendication 6,
dans lequel ladite roulette (2) comporte un axe primaire (AX1) autorisant une rotation de ladite roulette (2) sur elle-même et comporte des crans d'incrémentation autour dudit axe primaire (AX1), marquant mécaniquement une rotation de ladite roulette (2) entre deux desdits crans d'incrémentation.

8. Système de contrôle (10) selon l'une quelconque des revendications 6 à 7,
dans lequel ladite couronne rotative (4) comporte des crans d'incrémentation autour dudit axe principal (AX4), marquant mécaniquement une rotation de ladite couronne rotative (4) entre deux desdits crans d'incrémentation.

9. Système de contrôle (10) selon l'une quelconque des revendications 1 à 8,
dans lequel ledit bouton-poussoir (3) et ladite roulette (2) comportent respectivement des éléments de retour élastique pour les ramener à une position initiale.

10. Système de contrôle (10) selon l'une quelconque des revendications 1 à 9,
dans lequel ladite roulette (2) comportant un axe primaire (AX1) autorisant une rotation de ladite roulette (2) sur elle-même, ladite roulette (2) comporte une première roue codeuse autour dudit axe primaire (AX1) et des interrupteurs ou des jauges de contrainte le long de deux axes supplémentaires (AX2,AX3) distincts dudit axe primaire (AX1) pour détecter les déplacements de ladite roulette (2) autour desdits deux axes supplémentaires (AX2,AX3), ladite boule de commande (5) comporte des capteurs optiques pour détecter les déplacements de ladite boule de commande (5) autour desdits deux axes complémentaires (AX5,AX6) et ladite couronne rotative (4) comporte une seconde roue codeuse autour dudit axe principal (AX4).

11. Système de contrôle (10) selon l'une quelconque des revendications 1 à 10,
dans lequel lesdites commandes sont configurées pour déplacer ou modifier une image affichée sur ledit afficheur (30), pour déplacer un pointeur affiché sur ledit afficheur (30), pour effectuer une sélection sur ledit afficheur (30) ou effectuer une action de validation.

12. Système de contrôle (10) selon l'une quelconque des revendications 1 à 11,
dans lequel ledit calculateur (9) est configuré pour générer des ordres de commande transmis audit afficheur (30) en réponse à des signaux de commande transmis par lesdites commandes (2-5) afin d'effectuer :
- un déplacement d'un pointeur (35) affiché sur ledit afficheur (30) en fonction d'un déplacement de ladite boule de commande (5) selon lesdits deux axes complémentaires (AX5,AX6),
- une action de sélection ou de validation lors d'un appui sur ledit bouton-poussoir (3),
- une modification d'une échelle d'affichage d'une image affichée sur ledit afficheur en fonction d'une rotation de ladite roulette (2) autour d'un axe primaire (AX1) autorisant une rotation de ladite roulette (2) sur elle-même,
- un déplacement de ladite image en fonction d'un déplacement de ladite roulette (2) selon deux axes supplémentaires (AX2,AX3) distincts dudit axe primaire (AX1), et
- une rotation de ladite image en fonction d'une rotation de ladite couronne rotative (4) autour dudit axe principal (AX4).

13. Système d'affichage (20) comportant au moins un afficheur (30) affichant une image comprenant un pointeur et un système de contrôle (10) selon l'une quelconque des revendications 1 à 12.

14. Véhicule comportant au moins un afficheur (30) affichant une image comprenant un pointeur et un système de contrôle (10) selon l'une quelconque des revendications 1 à 12.

15. Procédé de contrôle d'au moins un afficheur (30) à l'aide d'un système de contrôle (10) selon les revendications 1 à 12,
le procédé comportant les étapes suivantes réalisées en fonction des actions sur ladite au moins une roulette (2), ledit bouton-poussoir (3), ladite couronne rotative (4) et ladite boule de commande (5) dudit système de contrôle (10) :
un déplacement (71) d'un pointeur (35) affiché sur ledit afficheur (30) en fonction d'un déplacement de ladite boule de commande (5) selon lesdits deux axes complémentaires (AX5,AX6),
- une action de sélection (72) ou de validation (73) lors d'un appui sur ledit bouton-poussoir (3),
- une modification (74) d'une échelle d'affichage d'une image affichée sur ledit afficheur (30) en fonction d'une rotation de ladite roulette (2) autour d'un axe primaire (AX1) autorisant une rotation de ladite roulette (2) sur elle-même,
- un déplacement (75) de ladite image en fonction d'un déplacement de ladite roulette (2) selon deux axes supplémentaires (AX2,AX3) distincts dudit axe primaire (AX1), et
- une rotation (76) de ladite image en fonction d'une rotation de ladite couronne rotative (4) autour dudit axe principal (AX4).

16. Procédé selon la revendication 15,
dans lequel lorsqu'aucun pointeur (35) n'est affiché sur ledit afficheur (30), une première action sur ladite au moins une roulette (2), ledit bouton-poussoir, (3), ladite couronne rotative (4) ou ladite boule de commande (5) génère un affichage (77) dudit pointeur (35) sur ledit afficheur (30).

17. Procédé selon la revendication 16,
dans lequel ledit pointeur (35) est affiché sur ledit afficheur (30) soit à une dernière position dudit pointeur (35) sur ledit afficheur (30), soit à une position de référence prédéterminée.

18. Procédé selon l'une quelconque des revendications 16 à 17,
dans lequel ladite première action est ignorée pour une réalisation des étapes de la revendication 15.
